# FASCICULE DE BREVET EUROPEEN

(11) **EP 1 415 454 B1**
(45) Date de publication et mention de la délivrance du brevet: **15.06.2016**
(21) Numéro de dépôt: 02764979.7
(22) Date de dépôt: 11.07.2002
(51) Int. Cl.: H04L 29/06

(54) **PROCEDE ET DISPOSITIF DE MISE EN COMPATIBILITE DE COMMUNICATION SUR RESEAU DE TERMINAUX, PAR EXEMPLE POUR PERMETTRE UN DIALOGUE AVEC UNE APPLICATION SUR CARTE A PUCE**
VERFAHREN UND VORRICHTUNG ZUM ERREICHEN VON KOMPATIBILITÄT VON NETZWERKENDGERÄTEN, ZUM BEISPIEL ZUM ERMÖGLICHEN EINES DIALOGS MIT EINER SOFTWARE-ANWENDUNG IN EINER CHIPKARTE
METHOD AND DEVICE FOR ESTABLISHING NETWORK COMMUNICATION COMPATIBILITY OF TERMINALS, FOR EXAMPLE TO ENABLE DIALOGUE WITH A SMART CARD APPLICATION

(30) Priorité: 02.08.2001 FR 0110390
(43) Date de publication de la demande: 06.05.2004
(73) Titulaire: Gemalto SA, 92190 Meudon (FR)
(72) Inventeur: LAGOSANTO, Laurent, F-13009 Marseille (FR); VANDEWALLE, Jean-Jacques, F-13001 Marseille (FR)
(74) Mandataire: Scheer, Luc
(86) Numéro de dépôt international: PCT/FR2002/002455
(87) Numéro de publication internationale: WO 2003/013100

(56) Documents cités:
- WO-A-01/24475
- WO-A-01/31880

## Description

L'invention concerne la communication sur réseau, par exemple entre un terminal serveur et un terminal application. Elle vise plus particulièrement un procédé et dispositif permettant d'établir un canal de communication sur un réseau alors que les terminaux n'ont pas la même interface logicielle d'échange de messages sur le réseau. Une telle situation se présente, par exemple, lorsque le terminal serveur est matérialisé par une carte à puce ou analogue.

Dans ce qui suit, on considérera le cas d'une communication avec une carte à puce comportant une application de service (Applet) écrite en langage de haut niveau, notamment un langage orienté objet, tel que Java, C++, etc. L'ensemble constitué par la carte et l'application de service forme une application sur carte. Cet ensemble constitue un terminal serveur pouvant participer à une communication avec un terminal client local ou sur réseau.

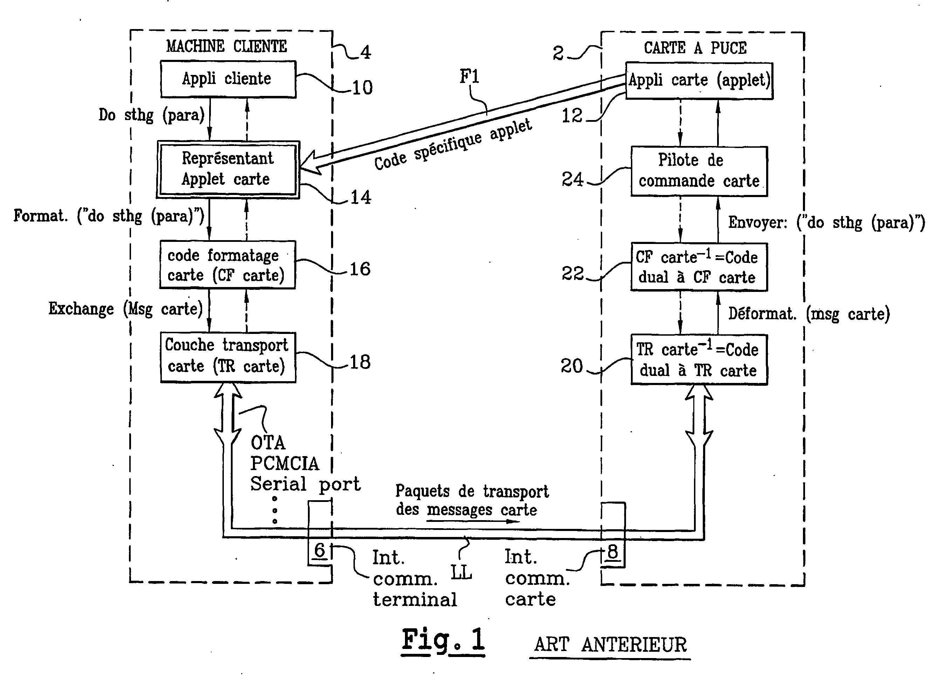

La figure 1 représente schématiquement les éléments fonctionnels qui interviennent lors d'une communication en mode local entre une carte à puce 2 et une machine cliente 4, cette dernière pouvant être un terminal dans un système centralisé. Une liaison locale LL assure l'échange bidirectionnel entre la machine cliente 4 et la carte 2 via des interfaces de communication respectives 6 et 8. La liaison locale LL peut être un câble série ou parallèle entre la machine cliente 4 et la carte 2 (ou son lecteur), ou encore une liaison hertzienne si la carte 2 fonctionne en mode sans contact.

La machine cliente 4 comporte l'application cliente 10 qui doit établir un dialogue avec une application de service 12 intégrée à la carte 2 et désignée ci-après "application carte". Dans l'exemple, l'application carte est réalisée sous une forme dite "Applet", qui est un terme consacré dans le cadre du langage "Java Card". Au niveau des applications cliente et de service, le dialogue s'effectue par des messages dans le langage de haut niveau émis par l'application cliente 10 de la machine 4. Ces messages comprennent généralement des ordres de traitement à effectuer sur des données qui sont stockées au sein de la carte 2. On aura alors, par exemple, pour un porte-monnaie électronique sur carte : m = débit porte-monnaie (paramètre = somme (valeur numérique), n = crédit porte-monnaie (paramètre = somme(valeur numérique) ; O = balance (pas de paramètre) (bilan des opérations). A titre illustratif, les commandes ont une structure syntaxique du type "débit (somme) " (pour le cas de la commande m précitée.

Ces commandes ne peuvent pas transiter en tant que tel sur la liaison locale LL, étant donné que celle-ci impose l'utilisation d'un protocole et d'un formatage, spécifiques. On installe alors, du côté machine cliente de la liaison locale LL, une succession de couches logicielles entre l'application cliente et l'interface de communication 6.

Partant de l'application cliente 10, une première couche logicielle constitue ce que l'on appelle le représentant de l'application carte 14, aussi connu par le terme anglo-saxon de "proxy". Le représentant est une couche développée et codée par le développeur de l'application carte 12, qui sert à présenter une interface logicielle permettant la communication avec cette application. Il s'agit d'une interface du point de vue fonctionnel de l'application carte, c'est-à-dire du côté "métier" de l'application, entièrement dédiée à celle-ci. Le représentant 14 sert alors à établir la compatibilité des commandes de l'application cliente 10 avec celles reconnues par l'application carte 12. Il est donc nécessaire de produire le code du représentant en fonction de l'application carte.

Le double cadrage d'un élément dans les figures, utilisé notamment pour identifier le représentant 14, indique les codes à développer et à transmettre à la machine cliente 4 afin de pouvoir utiliser l'application carte 12.

Ainsi, pour reprendre l'exemple d'une commande de l'application cliente 10 de structure syntaxique "do Sthg" avec des paramètres, soit "do Sthg(paramètres)", le représentant produira - à supposer que cette commande soit reconnue par l'application carte 12 - une commande dite de formatage, soit "format (do Sthg (paramètres)". Il est à noter que les paramètres peuvent, le cas échéant, être inexistants, donnant la structure "do Sthg()". Dans ce qui suit, les paramètres ne sont pas désignés explicitement. Ainsi, pour reprendre l'exemple de la commande m précitée, sa représentation dans la forme générale sera "do Sthg (paramètres) ".

Cette commande de formatage est transmise à une couche 16 en aval, dite de formatage carte CFcarte, qui assure la transformation du code issu de cette commande en un format de message adapté au dispositif de communication. Elle a notamment pour fonction de structurer le message à envoyer à l'application carte. A titre d'exemple, si la commande est destinée directement à la carte 2, le format produit par la couche de formatage 16 sera du type APDU (de l'anglo-saxon "application protocol data unit") ; si on passe par un protocole sans fil, il sera conforme à un code SMS (de l'anglo-saxon "short message service" ; il peut aussi s'agir d'un format spécifique à une carte, tel que le format JC21RMI (de l'anglo-saxon "Java Card 2.1 RMI")

Une fois le message structuré, il est prêt à être envoyé sur la liaison locale LL. On utilise à cette fin un protocole de communication, soit une couche 18 de transport TRcarte, qui est chargé d'émettre le message. Cette couche 18 assure le transport du message selon un protocole déterminé, par exemple : OTA (de l'anglo-saxon "over the air"), PCMCIA, "Serial port", etc. La couche de transport 18 TRcarte "empaquete" ainsi les messages ayant été formatés dans une structure adaptée au transport sur la liaison locale LL. Les messages ainsi empaquetés sont alors transmis à la carte 2, via les interfaces de communication 6 et 8 et la liaison locale LL.

Du côté de la carte 2, on retrouve les mêmes couches que sur la machine cliente 4 pour réaliser successivement les opérations inverses (dites opérations "duals") pour parvenir, à partir des données transmises depuis la couche de transport 18 TRcarte à la commande de haut niveau, en l'occurrence "do Sthg".

Ainsi, au niveau de la carte 2, la première couche du côté de l'interface 8 est une couche de transport dual 20 TRcarte⁻¹ qui a pour fonction de "désempaqueter" chaque message reçu sur la liaison locale LL. Dans le cas du message provenant de la commande "do Sthg", la couche dual 20 TRcarte⁻¹ produit une commande de "déformater" le message "Msg carte", soit "deformat (Msg carte)".

Cette commande est reçue par une couche de déformatage 22 CFcarte⁻¹, dual vis-à-vis de la couche 16 CFcarte, qui produit en réponse l'ordre de transmettre la commande "do Sthg (paramètres) à un pilote de commande de carte 24.

Le pilote 24 agit essentiellement comme router, sa fonction étant de diriger la commande ainsi déformatée vers l'application carte 12 qui lui est destinée.

La flèche F1 "code spécifique Applet" dans la figure, entre l'application carte 12 et le représentant 14, indique que pour le développement d'une application carte (par exemple une "Applet"), on doit installer le représentant de cette application sur l'application, cliente.

Bien entendu, les mêmes traitements des messages sont appliqués, en ordre inversé, pour les retours de l'application carte 12 vers l'application cliente 10, comme le montre les flèches en pointillées.

On note que dans la figure, tout ce qui existe entre les différents rectangles sont des appels à une routine du rectangle situé en aval.

L'entité "Message carte" (Msg Carte) est un format d'échange qui contient le nom de la méthode (par exemple "do Sthg"), et qui structure les paramètres selon le protocole qui va être utilisé ensuite. Le message carte constitue tout l'appel de méthode, donc son nom et ses paramètres, lesquels seront structurés selon un protocole de communication.

Quand ce message est envoyé à la couche de transport 18 TRcarte, on passe du protocole APDU au protocole dit TPDU, qui constitue le protocole de transport. Pour envoyer le message, on le décompose en une série de bits et de paquets sur la ligne. Le message est alors effectivement un codage d'une fonction. Quand il passe sur une couche de transport, il se présente sous forme de trames..

On comprend que le représentant constitue une passerelle qui permet à l'application cliente 10 de dialoguer comme si l'application carte 12 était présente sur la machine cliente ; autrement dit, il "représente" l'application de service en ce sens que l'application cliente interagit avec le représentant via les mêmes messages de haut niveau. Le représentant présente donc la même interface fonctionnelle, au même niveau d'accès, que l'application de service dans la carte. De la sorte, lorsque l'application cliente est appelée à communiquer avec l'application de service dans la carte, cette application cliente n'aura pas à encoder les messages pour les passer à un module de pilotage (connu sous le terme anglo-saxon de "driver"), mais n'aura plutôt qu'à émettre la commande souhaitée.

Les couches sont toujours les mêmes, quels que soient les dispositifs. Ainsi, pour la communication entre un client et un terminal distant, la stratification des couches reste invariable.

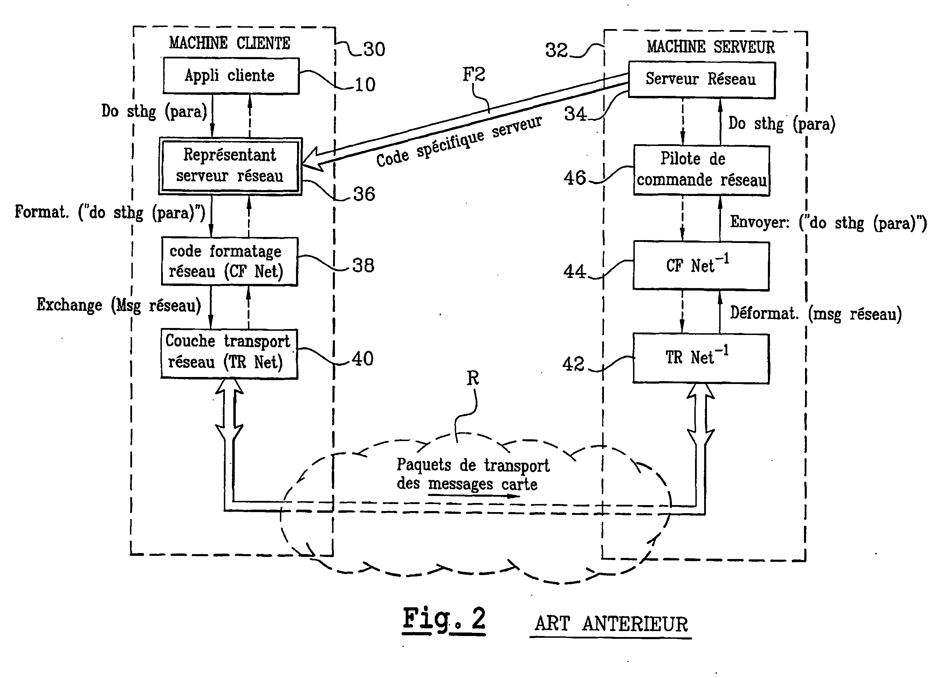

Cette communauté des couches est illustrée à la figure 2, qui représente une structure analogue à celle de la figure 1, mais appliquée au cas d'une communication sur un réseau R, tel qu'Internet, entre une machine cliente 30 et une machine serveur 32.

Plus particulièrement, la communication est établie entre une application cliente 10, installée dans la machine cliente 30, et un serveur réseau 34, analogue à l'application carte 12 de la figure 1, installée dans la machine serveur 32.

Le serveur réseau 34 est alors représenté, au niveau de la machine cliente 30, par un représentant serveur réseau 36, à l'instar du représentant carte 14 de la figure 1.

Dans la figure 2, et celles qui suivent, les interfaces matérielles de communication ne sont pas représentées pour des raisons de simplicité, étant donné que ces moyens sont bien connus.

Les commandes issues du représentant serveur réseau 36 sont traitées successivement par une couche de formatage réseau 38 CFnet et une couche de transport réseau 40 TRnet, analogues respectivement aux couches 16 CFcarte et 18 TRcarte de la figure 1. La couche 40 TRnet assure notamment le découpage des messages en trames adaptées aux normes du transport sur le réseau R.

Du côté de la machine serveur 32, on retrouve la couche de transport dual 42 TRnet⁻¹ qui réceptionne les trames reçues du réseau R et les reconstituent en messages tels qu'ils se trouvaient en sortie de la couche 38 CFnet.

La couche 42 TRnet⁻¹ est succédée par la couche dual 44 CFnet⁻¹, qui est un code de déformatage réseau ayant pour fonction de transformer les messages reconstitués en langage de haut niveau, par exemple sous la forme "envoyer "do Sthg" ".

Les commandes issues de la couche CFnet⁻¹ sont transmises à un pilote de commande réseau 46, qui les distribuent vers l'application destinée à les traiter, en l'occurrence le serveur réseau 34.

On note qu'il est toujours nécessaire de développer le code spécifique pour le représentant serveur réseau 36 en fonction du serveur 34 qu'il doit représenter.

L'utilisation du représentant serveur réseau 36 et du pilote commande réseau 14 aux extrémités respectives du réseau R permet à l'application cliente 10 de la machine cliente 30 de s'abstraire des protocoles de communication, son fonctionnement en ce qui concerne la communication demeurant au niveau du format général. Le représentant et le pilote de commande sont génériques par rapport au protocole de communication.

A partir des structures de transmission de messages selon les figures 1 et 2, il est envisageable, par simple concaténation de moyens, de faire communiquer une application carte avec une application cliente via un réseau R, et ainsi de faire communiquer la carte avec tout terminal distant.

Dans ce cas de figure, l'application carte sera reliée à un serveur réseau via une liaison locale, et l'application cliente sera reliée au serveur réseau via une connexion réseau.

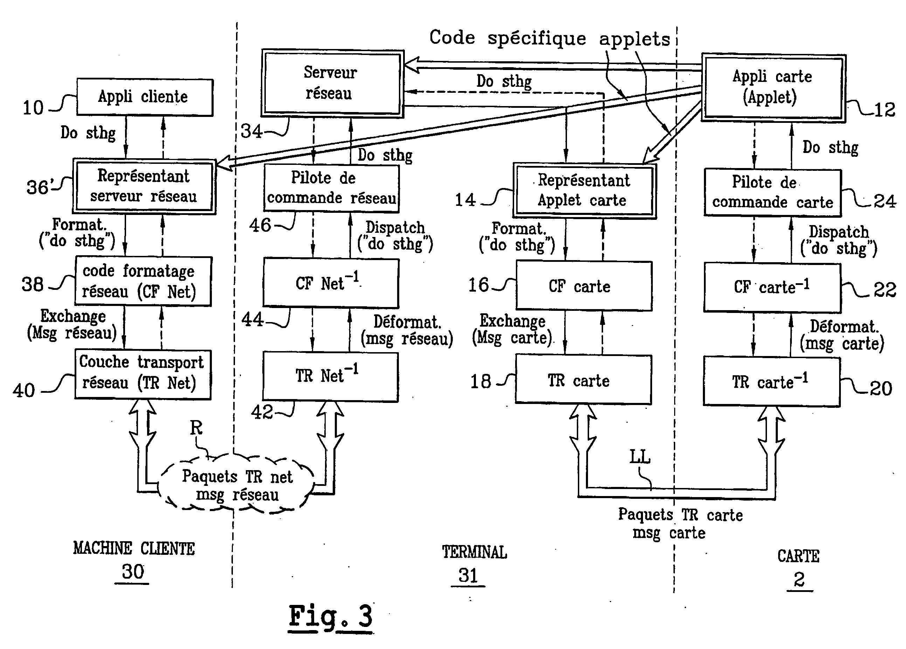

La mise en oeuvre consiste alors à une concaténation des chaînes de transmission des figures 1 et 2, comme le montre la figure 3. Les éléments de cette figure déjà évoqués dans le cadre de la figure 1 ou 2 portent les mêmes références et ne seront pas décrits à nouveau par souci de concision.

Selon cette concaténation, on retrouve du côté de la machine cliente 30 l'application cliente 10 suivie de ses trois couches : le représentant "Applet réseau" (appel à la méthode) 36, le code de formatage réseau (codage de l'appel) 38 CFnet et la couche de transport réseau 40 TRnet. Dans le cas d'espèce, le représentant serveur 36 de la figure 2 devient ici le représentant de l'application carte (Applet), désigné par la référence 36'.

Au niveau du terminal 31 associé à la carte 2, en aval du réseau R de la couche de transmission de paquets TRnet, on remonte toutes les couches duals, à savoir successivement : 42 TRnet⁻¹ et 44 CFnet⁻¹ pour transmettre une commande ("do Sthg") au pilote de commande 46, afin qu'elle soit aiguillée vers le serveur réseau 34.

Ensuite, la commande "do Sthg" est réexpédiée depuis le serveur réseau 34 vers le représentant de l'application carte 14 au sein du terminal 31. Le représentant émet en réponse la commande "format ("do Sthg") vers la couche 16 CFcarte qui émet alors le message carte (Msg Carte) à la couche 18 de transport 18 TRcarte pour que ce message soit transmis sous forme de paquets sur la liaison locale LL vers la carte 2.

Au niveau de la carte 2, les paquets sont traités successivement par les couches duals 20 TRcarte⁻¹, et 22 CFcarte⁻¹ pour obtenir l'ordre de transmettre la commande ("do Sthg") au pilote de commande carte 24. Ce dernier transmet enfin la commande "do Sthg" à l'application carte 12.

En résumé, l'élaboration d'une application de service et d'une application cliente comprend les étapes suivantes :
- écriture d'une application de service,
- écriture d'un représentant pour les terminaux,
- réalisation de l'application cliente avec par exemple des interfaces utilisateur (fenêtres, menus, etc.), en communiquant dans un langage de haut niveau avec le représentant de l'application carte.

On constate que les maillons principaux de la chaîne de communication entre l'application cliente sur la machine cliente 30 et l'application carte 2 sur le terminal 31 comprennent : un serveur réseau 34, un représentant du serveur réseau 36', et un représentant 14 de l'application carte 12 au niveau du terminal 31. Chacun de ces éléments 34, 36' et 14 comprend du code informatique qui est lourd à écrire et à entretenir. Si l'application change pour qu'elle puisse exploiteur d'autres messages, il devient alors nécessaire d'intervenir séparément sur le code de chacun de ces trois maillons, le représentant réseau 36' devant être ainsi modifié pour toutes les machines susceptibles de communiquer avec l'application cliente.

Une partie de ce code peut être élaboré par des techniques de génération de représentant, mais il n'en demeure pas moins que la mise en place ou la modification d'une application dans un environnement réseau est fastidieuse.

Ce code doit par ailleurs être déployé, c'est-à-dire qu'il est nécessaire d'installer le représentant carte 14 et le serveur réseau 34 sur les terminaux respectifs, de relier ces deux maillons 14 et 34, et ensuite d'installer le représentant sur l'application cliente. Ensuite, on doit effectuer la liaison de l'ensemble de ces trois maillons pour assurer la bonne communication, notamment entre le serveur réseau 34 et le représentant carte 14.

Les difficultés de déploiement sont alors de l'ordre de la gestion et de la maintenance. Les risques d'erreur sont d'autant plus grands que le code de ces maillons est complexe et long à produire, surtout s'il est écrit manuellement.

Par ailleurs, du fait du nombre important de couches logicielles entre l'application cliente 10 et l'application de service 12, la communication peut souffrir d'un délai significatif dans le temps de réponse. D'autre part, les liaison entre chaque couche logicielle impliquent des problèmes d'interfaçage qui s'ajoutent aux délais précités.

Cela se traduit par un délai significatif dans le temps de réponse, puisqu'un traitement est effectué à chaque maillon.

Enfin, cette approche se prête mal à la sécurisation d'un bout à l'autre de la chaîne. En effet, il est alors nécessaire de prévoir une étape de chiffrement et de déchiffrement des messages respectivement en amont et en aval de chaque maillon 36', 34 et 14 pour que les messages puissent être compris par ces derniers.

Il a été récemment proposé dans "objets mobiles embarqués dans une carte à puce internet, pour le commerce d'objets virtuels multimédia", P. Urien, Bull R&D, Conférence OCM 2000, Objets, Composants, Modèles "Passé, Présent, Futur",18 mai 2000, École des Mines de Nantes, de résoudre ces problèmes d'accès par réseau à une carte distante en mettant la carte au format du réseau. L'idée est alors qu'au lieu d'avoir un protocole particulier pour communiquer avec la carte, ce qui oblige d'installer un pilote entre le terminal et la carte, la carte est directement accessible comme s'il s'agissait d'un serveur sur le réseau.

Avec cette approche, la liaison s'établit avec un client distant, un représentant réseau standard, le réseau, et la carte directement reliée au réseau. Il n'y a plus de maillons intermédiaires entre la carte et le réseau.

Cependant, il s'avère qu'il est impossible de réaliser une telle carte dans l'état actuel de la technique.

Une première technique d'accès par réseau à une carte à puce, en tant dispositif communicant, est décrite dans le document de brevet WO 01/31880 A1. Une telle première technique concerne une architecture permettant de faire communiquer un serveur, en tant qu'application cliente, et une application carte à puce, en tant qu'application de service. Pour ce faire, l'architecture intègre un noeud de communication, d'abord au niveau d'un terminal connecté à la carte à puce, puis au niveau d'une enceinte sécurisée prévue au sein du terminal et dotée d'un lecteur de carte à puce, et enfin au niveau de la carte à puce, en s'adressant à la carte à puce comme à un serveur HTTP réseau.

Une deuxième technique d'accès par réseau à une carte à puce, en tant dispositif communicant, est décrite dans le document de brevet WO 01/24475 A2. Une telle deuxième technique concerne une architecture permettant de faire communiquer un serveur, en tant qu'application cliente, et une application carte à puce, en tant qu'application de service. Pour ce faire, l'architecture prévoit d'intégrer au sein d'un terminal connecté à la carte à puce, un navigateur Web et un serveur TCP/IP, pour s'adresser, via le serveur TCP/IP, à la carte à puce.

Au vu de ce qui précède, l'invention a pour objets, un système, un procédé, et une utilisation d'une passerelle du type réseau-dispositif communicant selon les revendications 1, 9 et 14 ci-annexées respectivement.

Les caractéristiques optionnelles de l'invention présentées dans le cadre du système peuvent s'appliquer mutatis mutandis au procédé supra selon le second aspect, et ne seront pas répétées par souci de concision.

L'invention et les avantages qui en découlent apparaîtront plus clairement à la lecture des modes de réalisation préférés, donnés uniquement à titre d'exemples non-limitatifs, par référence aux dessins annexés dans lesquels :
- la figure 1, déjà décrite, est un schéma synoptique des maillons intervenant pour réaliser une communication entre une application cliente et une application carte via une liaison locale selon une technique connue ;
- la figure 2, déjà décrite, est un schéma synoptique des maillons intervenant pour réaliser une communication entre une machine cliente et une machine serveur via un réseau, tel qu'Internet, selon une technique connue ;
- la figure 3, déjà décrite, est un schéma synoptique des maillons intervenant pour réaliser une communication entre une application cliente sur une machine cliente et une application carte via un réseau, par simple combinaison des moyens des figures 1 et 2 ;
- la figure 4 est un schéma synoptique des maillons intervenant pour réaliser une communication entre une application cliente sur une machine cliente et.une application carte via un réseau selon un premier mode de réalisation de l'invention ;
- la figure 5 est un schéma analogue à celui de la figure 4, représentant une variante qui constitue un deuxième mode de réalisation de l'invention ; et
- la figure 6 est un schéma analogue à celui de la figure 4, représentant une autre variante pour le cas d'une liaison directe entre la machine cliente et la carte, qui constitue un troisième mode de réalisation de l'invention.

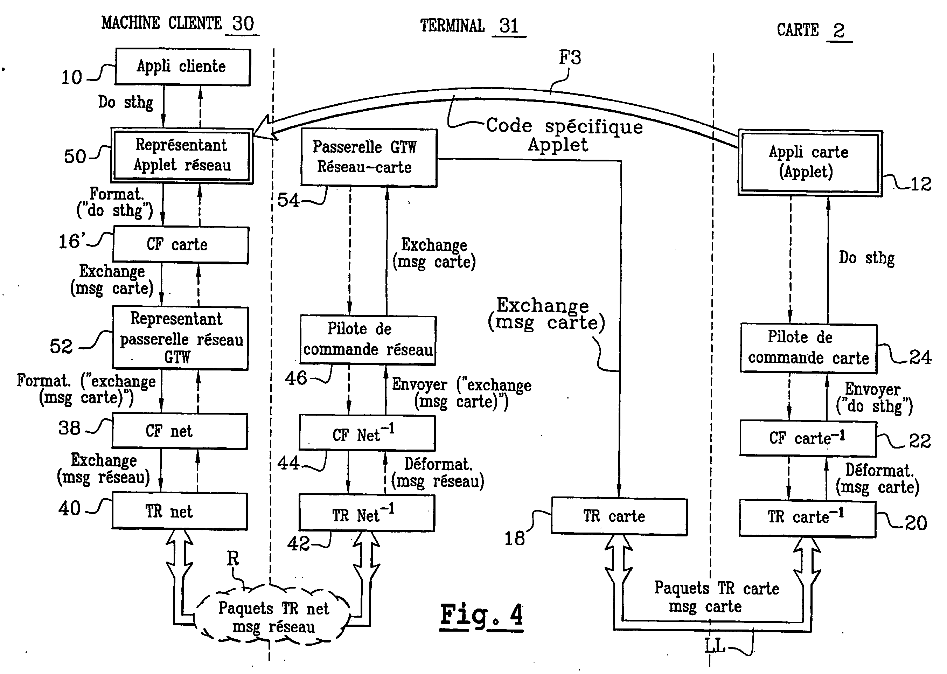

Dans l'ensemble des figures 4 à 6, les éléments déjà présentés dans le cadre des figures 1 à 3 portent les mêmes références et ne seront pas décrits à nouveau par souci de concision.

La figure 4 représente les éléments principaux qui interviennent dans un premier mode de réalisation de l'invention.

Conformément à ce mode, une chaîne de transmission de messages est établie entre une application cliente 10 située sur une machine cliente 30 et une application carte (Applet) 12 située dans une carte à puce 2 ou tout autre dispositif portatif communicant, associé à un terminal 31. La transmission de messages entre le terminal 31 et la carte 2 est assurée par une liaison locale LL. La machine cliente 30 est distante et communiquer avec le terminal 31 via un réseau R, tel qu'Internet.

La chaîne de transmission sera décrite dans le cadre d'un message, en l'occurrence la commande "do Sthg", émis depuis l'application cliente 10 vers l'application carte 12.

Au niveau de la machine cliente 30, on prévoit un représentant "Applet réseau" 50 pour émettre des commandes de formatage appropriés à partir des messages de l'application cliente 10. Ainsi, dans le cas du message "do Sthg", le représentant "Applet réseau" 50 produira une commande de formatage "format("do Sthg").

Conformément à l'invention, le message "do Sthg" est ensuite codé non pas dans le format du réseau R, mais directement dans un format compréhensible par l'application carte 12. A cette fin, on prévoit en aval du représentant "Applet réseau" 50 une couche 16' de code de formatage carte CFcarte. Cette couche 16' a pour fonction de créer un message Msg Carte, compréhensible par une couche dual 22 CFcarte⁻¹ au niveau de la carte 2, qui correspond à la commande de haut niveau "do Sthg". La couche dual 22 pourra alors rendre la commande "do Sthg" en réponse à une commande de déformatage du message Msg Carte.

Pour assurer le transport du message Msg Carte, la couche 16' CFcarte initialise le processus d'encapsulation du message en demandant que celui-ci soit intégré dans un format de tableau d'octets "byte[]", qui constitue une enveloppe pour le message, compréhensible pour lé réseau R, et à l'intérieur de laquelle il pourra ainsi être transporté tel quel à travers le réseau R. A cette fin, la couche 16' CFcarte sera suivie d'un ensemble de couches qui va permettre le transfert du message sur le réseau R.

Dans l'exemple, cette disposition est obtenue par une opération "exchange" (échange) qui agit sur le message Msg Carte. Ainsi, on obtient en sortie de la couche 16' CFcarte la commande "exchange(Msg Carte)".

Cette commande "exchange(Msg Carte)" est ensuite transmise depuis la couche 16' CFcarte vers un représentant GTW 52 de la passerelle 54. La fonction de ce représentant GTW 52 est de commander le formatage des messages qui lui sont présentés en vu de leur transport sur le réseau. Le représentant GTW est une couche logicielle développée spécifiquement pour représenter une passerelle GTW réseau-carte 54 située au niveau du terminal 31. Le terme passerelle est également connu par la dénomination anglo-saxonne de "gateway".

On note que le représentant de la passerelle GTW 52 remplace le serveur de réseau 34 des figures 2 et 3. Il est générique en ce sens qu'il n'a pas la même interface que l'application carte (Applet) 12 contenue dans la carte. En effet, à la différence du serveur réseau 34 précité, il n'est pas nécessaire au représentant de la passerelle GTW 52 d'interpréter le contenu des messages qu'elle fait transiter. Pour cela, la couche CFnet 38 sert à "encapsuler", soit à insérer dans une enveloppe, le message (Msg Carte) à faire transiter par la passerelle GTW réseau-carte 54 selon un format de capsule (ou d'enveloppe) qui est compréhensible par une passerelle générique. Dans ce contexte, l'opérateur "exchange" constitue avec le représentant GTW 52 une nouvelle interface vis-à-vis de la passerelle réseau-carte 54 au niveau du terminal 31, comme il apparaîtra plus loin.

Ainsi, le représentant de passerelle GTW 52 émet à destination d'une couche. 38 de formatage réseau CFnet une commande de formatage du type "format("exchange (Msg Carte)")".

La couche CFnet 38 émet alors la commande sous forme de message réseau "Msg Réseau" vers une couche de transport 40 TRnet. Cette dernière assure la transmission sur le réseau R de la commande sous forme de paquets TRnet au format des messages réseau. Les fonctions des couches 38 CFnet et 40 TRnet sont en tout point analogues à celles des couches correspondantes de la figure 2.

On note que le format du message en sortie de la couche 40 TRnet est composé de deux couches :
- une couche "intérieure", où l'on retrouve le format de type carte, compréhensible par l'application carte 12, par exemple du type APDU, SMS ou Java Card RMI, et
- une surcouche, qui correspond au formatage du réseau, par exemple selon le protocole Internet.

Conceptuellement, on met le message, en l'occurrence la commande "do Sthg" dans une enveloppe nommée "exchange", laquelle est formatée avec une adresse et véhiculée par la couche de transport 40 TRnet.

De l'autre côté du réseau, au niveau du terminal 31, le message issu de la couche 40 TRnet est traité successivement par des couches duals 42 TRnet⁻¹ et 44 CFnet⁻¹, qui produisent les fonctions inverses respectivement des couches 40 TRnet et 38 CFnet de la machine cliente 30. Comme décrit dans le cadre de la figure 2, on obtient alors successivement la commande "deformat (Msg réseau)" en sortie de la couche 42 TRnet¹ et la commande "envoyer ("exchange (Msg Carte)") de la couche 44 CFnet⁻¹.

En sortie de la couche CFnet⁻¹, la commande "envoyer ("exchange (Msg Carte)")" est réceptionnée par un pilote de commande réseau 46, qui la dirige vers la passerelle GTW réseau-carte 54 du terminal. La passerelle GTW 54 envoie alors le message "Msg Carte" vers une couche de transport 18 TRcarte du terminal 31. Celle-ci assure la conversion au format de transport, selon un découpage par parquet spécifique, pour la transmission sur la liaison locale LL vers la carte 2.

Au niveau de la carte, le message ainsi transmis est traité par les couches duals 20 TRcarte⁻¹ et 22 CFcarte⁻¹, qui produisent respectivement la commande "deformat (Msg Carte) et la commande "envoyer ("do Sthg")". Cette dernière est réceptionnée par un pilote de commande carte 24 qui transmet la commande "do Sthg" à l'application carte (Applet) 12.

L'organisation selon la figure 4 est remarquable en ce qu'elle ne nécessite de développer qu'un seul code spécifique à l'application carte, à savoir le représentant "Applet réseau" 50 de cette application au niveau de la machine cliente 30 (flèche F3). contrairement au cas de la figure 3, il est inutile de développer, de coder et de gérer un serveur réseau spécifique, ni un représentant de l'application carte sur le serveur. Il en résulte une grande simplification de la mise en oeuvre d'une communication sur réseau entre l'application cliente 10 et l'application carte 12.

Par ailleurs, la mise en oeuvre de la passerelle GTW réseau-carte 54 est aisée, puisque celle-ci n'est pas spécifique à l'application carte 12. En effet, il suffit à la passerelle GTW réseau-carte 54 d'être spécifique simplement aux protocoles de communication établis, soit un protocole d'entrée et un protocole de sortie, pour assurer la communication. Dans l'exemple, la passerelle GTW réseau-carte 54 est capable de réceptionner un message selon un protocole Internet pour le ré-émettre selon un protocole carte.

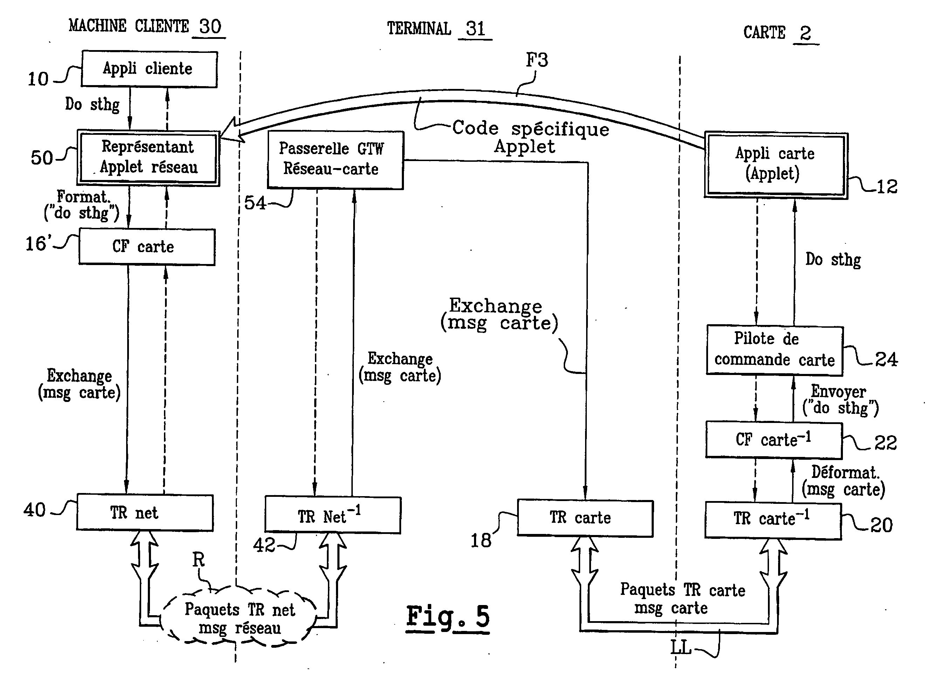

La figure 5 représente l'organisation d'un deuxième mode de réalisation de l'invention, adapté à une communication entre la machine cliente 30 et le terminal 31 selon un mode connu par l'appellation "socket". Conformément au mode "rocket", un format d'échange est préétabli entre le client et le serveur, ce qui permet de s'affranchir du représentant passerelle réseau GTW 52 et de la couche 38 CFnet au niveau de la machine cliente 31, et de la couche dual 44 CFnet⁻¹ et du pilote de commande réseau 46 au niveau du terminal 31. Hormis la suppression de ces éléments, la configuration et le principe de fonctionnement de ce mode de réalisation sont identiques à celui de la figure 4.

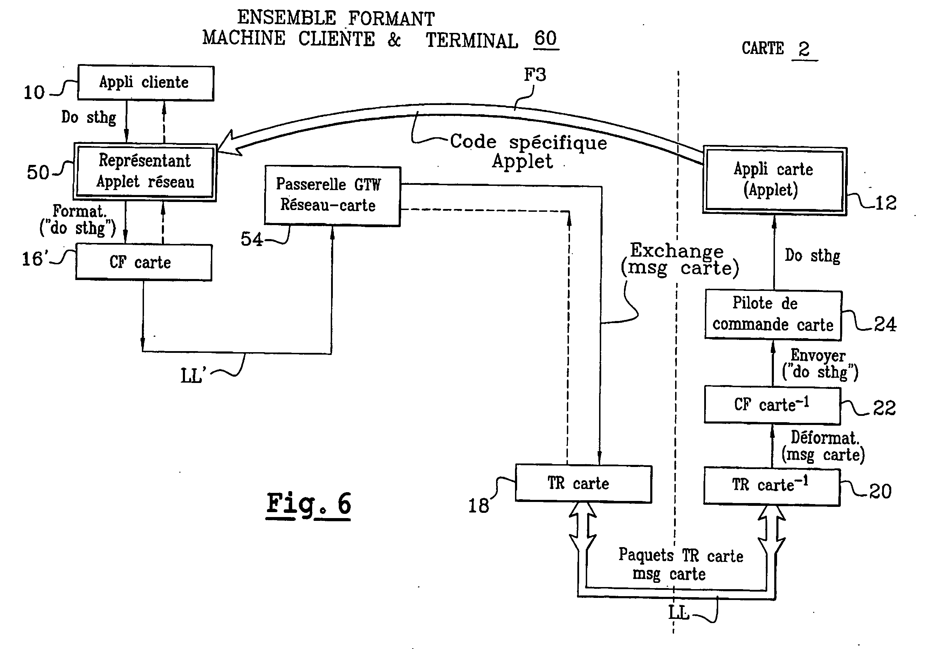

La figure 6 représente l'organisation d'un troisième mode de réalisation de l'invention, adapté pour le cas d'une application cliente 10 située sur le même support physique que le terminal comportant la passerelle GTW 54.

Selon cette configuration, le support physique 60 intègre une liaison interne et directe LL' entre la couche CFcarte 16' et la passerelle GTW 54. On note que celle-ci est une passerelle du type liaison interne-carte. Les commandes de type "exchange" en sortie de la couche CFcarte 16' ainsi envoyées directement à la passerelle GTW réseau-carte 54 sont retransmises par cette dernière à l'application carte 12 par les couches successives 18 à 24, comme dans les cas précédents.

En variante, l'ensemble 60 peut se connecter via la même passerelle GTW réseau-carte 54 aussi bien sur l'application cliente 10 qu'il intègre que sur toute autre application cliente reliée par réseau, ce qui confère une polyvalence au niveau de l'architecture système.

Bien entendu, les systèmes de communication des figures 4 à 6 permettent également de gérer les retours de message (chemin par flèches en pointillés) depuis l'application carte 12 vers l'application cliente 10 par simple inversion des transformations aux couches successives.

Dans tous les modes de réalisation, il est aisé de réaliser une sécurité "de bout en bout" entre l'application cliente 10 et l'application carte 12. En effet, puisque la passerelle GTW réseau-carte 54 n'a pas besoin d'interpréter le contenu des messages, il devient possible de sécuriser les messages au niveau de la couche 16 CFcarte de la machine cliente et les maintenir sécurisés jusqu'à la couche dual 22 CFcarte⁻¹ de la carte 2, où ils peuvent être décodés.

L'invention a été décrite dans le cadre d'applications sur carte à puce 2 accédées par une application cliente sur un terminal distant (figures 4 et 5) ou local (figure 6). Il est cependant clair que les principes de l'invention ont des champs d'application beaucoup plus larges, couvrant l'ensemble du domaine de la mise en compatibilité de systèmes communicants. A titre d'exemples non-limitatifs, l'invention peut être mise en oeuvre en outre avec :
- tout dispositif communicant, portatif ou pas ;
- tout type de protocole de communication sur réseau ou sur liaison locale ;
- tout type d'application à chaque extrémité de la chaîne de communication ;
- tout protocole de structuration et de formatage de messages selon les couches logicielles et les langages utilisés ;
- un nombre illimité de machines communicantes reliées.

## Revendications

1. Système pour établir un canal de communication sur une liaison (R; LL') reliant, d'une part, une application cliente (10) sur une machine cliente (30) et, d'autre part, une application de service (12), l'application de service étant présente sur un dispositif (2) communicant, le dispositif communicant étant relié à un terminal (31),
**caractérisé en ce que** le système comprend en outre:
- un représentant (50) de l'application de service situé au niveau de la machine cliente (30), pour émettre des commandes de formatage à partir de messages de l'application cliente,
- un module de formatage (16') situé au niveau de la machine cliente (30), en aval dudit représentant (50), pour formater les messages de l'application cliente sous une forme (exchange(Msg carte)) compréhensible par l'application de service (12), et
- une passerelle (54) située au niveau du terminal (31), pour réceptionner lesdits messages compréhensibles par le dispositif communicant et transmettre lesdits messages compréhensibles par le dispositif communicant à l'application de service (12).

2. Système selon la revendication 1, dans lequel le dispositif communicant est une carte à puce (2), l'application de service étant une application carte (12).

3. Système selon la revendication 1 ou 2, dans lequel le système comporte, en outre, des moyens de sécurisation des messages fonctionnant au niveau du module de formatage (16') ou en amont du module de formatage, afin de permettre aux messages sécurisés issus du module de formatage de transiter, sous forme sécurisée, à travers la passerelle (54) et jusqu'au dispositif communicant (2).

4. Système selon l'une quelconque des revendications 1 à 3, dans lequel ladite liaison comprend un réseau (R) reliant la machine cliente (30) et le terminal (31), ladite passerelle (54) étant une passerelle du type réseau-dispositif communicant.

5. Système selon la revendication 4, dans lequel le module de formatage (16') est relié au réseau (R) via une concaténation de modules composée successivement :
- d'un représentant (52) de ladite passerelle (54), pour recevoir les commandes de formatage (exchange(Msg carte)) du module de formatage (16') et produire en réponse des commandes (format (exchange (Msg carte))) de formatage de ces commandes selon un format compréhensible par ladite passerelle (54);
- d'un module de formatage réseau (38) pour formater lesdites commandes du représentant (52) de la passerelle en messages (exchange Msg Réseau) au format réseau ; et
- d'un module de transport (40) pour adapter lesdits messages (exchange Msg Réseau) aux normes du réseau (R);
et dans lequel ladite passerelle (54) est reliée au réseau (R) via une concaténation de modules composée successivement :
- d'un module (42) dual au module de transport (40) relié au réseau (R) pour récupérer lesdits messages (exchange Msg Réseau) issus du réseau ;
- d'un module (44) dual au module de formatage réseau (38) pour récupérer les commandes telles qu'issues du représentant (52) de ladite passerelle (54) ; et
- d'un pilote de commandes réseau (46) pour transmettre les messages (exchange (Msg carte)) provenant du module (44) dual au module de formatage réseau (38) vers ladite passerelle (54).

6. Système selon la revendication 4, dans lequel le module de formatage (16') est relié au réseau (R) via un module de transport (40) destiné à recevoir directement du module de formatage lesdits messages (exchange (Msg carte)) compréhensibles par le dispositif communicant et empaqueter lesdits messages compréhensibles par le dispositif communicant, les messages résultant d'une opération d'empaqueter étant dits empaquetés, pour transporter lesdits messages compréhensibles par le dispositif communicant via le réseau (R),
et dans lequel, la passerelle réseau-dispositif communicant (54) étant reliée au réseau (R), via un module (42) dual au module de transport (40), le module dual au module de transport (40) dés-empaquette les messages empaquetés pour récupérer lesdits messages (exchange (Msg carte)) compréhensibles par le dispositif communicant et re-transmettre directement à ladite passerelle (54) lesdits messages compréhensibles par le dispositif communicant.

7. Système selon l'une quelconque des revendications 1 à 3, dans lequel ladite machine cliente (30) et ledit terminal (31), réunis sur un même support physique (60), sont reliés par une liaison interne (LL'),
et dans lequel le module de formatage (16') est prévu pour transmettre directement, sur ladite liaison interne, les messages de l'application cliente formatés (exchange (Msg carte)) à ladite passerelle (54).

8. Ensemble formant terminal (31; 60) spécifiquement adapté au système selon l'une quelconque des revendications 1 à 7, dans lequel l'ensemble comprend une passerelle du type réseau-dispositif communicant (54) adaptée pour recevoir et traiter indifféremment des messages d'une application cliente au format réseau livrés par liaison interne (LL') ou par réseau (R).

9. Procédé pour établir un canal de communication sur une liaison (R; LL') reliant, d'une part, une application cliente (10) sur une machine cliente (30) et, d'autre part, une application de service (12), l'application de service étant présente sur un dispositif communicant (2), le dispositif communicant étant relié à un terminal (31),
**caractérisé en ce que** le procédé comprend :
- une étape de représentation (50) de l'application de service réalisée au niveau de la machine cliente (30), pour émettre des commandes de formatage à partir de messages de l'application cliente,
- une étape de formatage (16') réalisée au niveau de la machine cliente (30), en aval dudit représentant (50), pour formater les messages de l'application cliente sous une forme (exchange (Msg carte)) compréhensible par l'application de service (12), et
- la constitution d'une passerelle (54) au niveau du terminal (31), pour réceptionner lesdits messages compréhensibles par le dispositif communicant et transmettre lesdits messages compréhensibles par le dispositif communicant à l'application de service (12).

10. Procédé selon la revendication 9, dans lequel le procédé est mis en oeuvre avec un dispositif communicant du type carte à puce (2), l'application de service étant une application carte (12).

11. Procédé selon la revendication 9 ou 10, dans lequel le procédé comporte, en outre, une étape de cryptage des messages lors de ou avant l'étape de formatage (16'), afin de permettre aux messages cryptés issus du module de formatage de transiter, sous forme cryptée, à travers la passerelle (54) et jusqu'au dispositif communicant (2).

12. Procédé selon l'une quelconque des revendications 9 à 11, dans lequel, la machine cliente (30) étant reliée au terminal (31) par un réseau (R), l'étape de formatage (16') est suivie, au niveau de la machine cliente (30), successivement des étapes de :
- représentation (52) de ladite passerelle (54), pour recevoir des commandes de formatage (exchange(Msg carte)) du module de formatage (16') et produire en réponse des commandes de formatage de ces commandes selon un format compréhensible par ladite passerelle (54) ;
- formatage des messages issus de ladite représentation (52) de la passerelle (54) en messages (exchange Msg Réseau) au format réseau; et
- d'adaptation (40) desdits messages (exchange Msg Réseau) aux normes du réseau (R);
et dans lequel les messages reçus du réseau (R) au niveau du terminal (31) sont traités successivement par des étapes de :
- récupération (42) desdits messages (exchange Msg Réseau) à partir des messages issus du réseau ;
- récupération (44) des commandes telles qu'issues du représentant (52) de ladite passerelle (54) ; et
- pilotage de commandes réseau (46) pour transmettre les messages (exchange Msg carte) provenant du module précédent (44) vers ladite passerelle (54).

13. Procédé selon l'une quelconque des revendications 9 à 12, dans lequel :
- l'étape de formatage (16') est suivie directement par une étape d'empaquetage (40) desdits messages (exchange Msg carte) compréhensibles par le dispositif communicant, les messages résultant d'une étape d'empaquetage étant dits empaquetés, pour transporter lesdits messages compréhensibles par le dispositif communicant via le réseau (R) ;
et dans lequel lesdits messages empaquetés sont dés-empaquetés au cours d'une étape de désempaquetage (42) au niveau du terminal (31) pour récupérer lesdits messages (exchange (Msg carte)) issus de l'étape de formatage et re-transmettre directement à ladite passerelle (54) lesdits messages compréhensibles par le dispositif communicant.

## Patentansprüche

1. System zur Erstellung eines Kommunikationskanals über eine Verbindung (R; LL'), die eine Clientanwendung (10) an einer Clientmaschine (30) einerseits und eine Dienstanwendung (12) andererseits verbindet, wobei die Dienstanwendung auf einem Kommunikationsgerät (2) vorhanden ist, wobei das Kommunikationsgerät mit einem Terminal (31) verbunden ist,
**dadurch gekennzeichnet, dass** das System außerdem umfasst:
- einen Vertreter (50) der Dienstanwendung, an der Clientmaschine (30), um Formatierungsbefehle von Nachrichten, die von der Clientanwendung ausgehen, auszugeben,
- ein Formatierungsmodul (16') an der Clientmaschine (30), dem Vertreter (50) nachgeschaltet, um die Nachrichten der Clientanwendung in eine Form (Austausch(Msg Karte)) zu formatieren, die für die Dienstanwendung (12) verständlich ist; und
- ein Gateway (54) am Terminal (31), um die Nachrichten zu empfangen, die für das Kommunikationsgerät verständlich sind und die für das Kommunikationsgerät verständliche Nachrichten an der Dienstanwendung (12) zu übermitteln.

2. System gemäß Anspruch 1, wobei das Kommunikationsgerät eine Chipkarte (2) ist, wobei die Dienstanwendung eine Anwendungskarte (12) ist.

3. System gemäß Anspruch 1 oder 2, in dem das System außerdem Sicherungsmittel für die Nachrichten umfasst, funktional am Formatierungsmodul (16') oder dem Formatierungsmodul vorgeschaltet, um sicheren Nachrichten zu ermöglichen, die vom Formatierungsmodul ausgegeben werden, um in einer sicheren Form über das Gateway (54) bis zum Kommunikationsgerät (2) übermitteln werden.

4. System gemäß einem der Ansprüche 1 bis 3, wobei die Verbindung ein Netzwerk (R) umfasst, dass die Clientmaschine (30) und das Terminal (31) verbindet, wobei das Gateway (54) ein Gateway vom Typ Netzwerk-Kommunikationsgerät ist.

5. System gemäß Anspruch 4, wobei das Formatierungsmodul (16') mit dem Netzwerk (R) über eine Kette von Modulen verbunden ist, die Modulen nacheinander aus folgendem bestehen:
- einem Vertreter (52) des Gateways (54) um die Formatierungsbefehle (Austausch (Msg Karte)) des Formatierungsmoduls (16') zu empfangen und als Antwort Befehle (Format (Austausch (Msg Karte)) für die Formatierung dieser Befehle in ein für das Gateway (54) verständliches Format zu erzeugen;
- einem Modul für die Netzwerkformatierung (38), um die Befehle des Gatewayvertreters (52) in Nachrichten (Austausch (Msg Netzwerk)) in das Netzwerkformat zu formatieren;und
- einem Übertragungsmodul (40), um die Nachrichten (Austausch Msg Netzwerk) an die Normen des Netzwerks (R) anzupassen;
- und in dem das Gateway (54) an das Netzwerk (R) angeschlossen ist, über eine Kette von Modulen, die nacheinander aus folgendem bestehen:
- einem dualen (42) Modul am Übertragungsmodul (40) verbunden mit dem Netzwerk (R), um die Nachrichten (Austausch Msg Netzwerk), die vom Netzwerk (R) ausgegeben werden, zu sammeln;
- einem dualen Modul (44) am Formatierungsmodul des Netzwerks (38), um die vom Vertreter (52) des Gateways (54) ausgegebenen Befehle zu sammeln; und
- einem Pilot von Netzwerkbefehle (46), um die Nachrichten (Austausch (Msg Karte)), die vom dualen Modul (44) am Formatierungsmodul des Netzwerks (38) stammen, über das Gateway (54) zu übermitteln.

6. System gemäß Anspruch 4, in dem das Formatierungsmodul (16') mit dem Netzwerk (R) über ein Transportmodul (40) verbunden ist, das dazu bestimmt ist, direkt vom Formatierungsmodul die Nachrichten (Austausch (Msg Karte)) zu empfangen, die für das Kommunikationsgerät verständlich sind und die Nachrichten, die für das Kommunikationsgerät verständlich sind, zu verpacken, die aus einer Packetierung entstehenden Daten sind so genannte packetierte Nachrichten, um die Nachrichten, die für das Kommunikationsgerät verständlich sind, über das Netzwerk (R) zu übermitteln,
und in dem das Netzwerk-kommunikationsgerät Gateway (54), mit dem Netzwerk (R) über ein duales Modul (42) am Transportmodul (40) angeschlossen ist, das duale Modul am Transportmodul (40) die packetierte Nachrichten entpackt, um die Nachrichten (Austausch Msg Karte) zu sammeln, die für das Kommunikationsgerät verständlich sind und direkt am Gateway (54) die Nachrichten, die für das Kommunikationsgerät verständlich sind, wiederzuübermitteln.

7. System gemäß einer der Ansprüche 1 bis 3, wobei die Clientmaschine (30) und das Terminal (31), die auf einem gleichen physischen Medium vorgesehen sind, über eine interne Verbindung verbunden sind, und wobei das Formatierungsmodul vorgesehen ist, um direkt, über die interne Verbindung, die Nachrichten (Austausch Msg Karte) der Clientanwendung, die vom Client formatiert wurden, am Gateway (54) zu übermitteln.

8. Aufbau, der ein Terminal (31; 60) bildet, der spezifisch an das System angepasst ist, gemäß einer der Ansprüche 1 bis 7, in dem der Aufbau ein Gateway vom Typ Netzwerk-kommunikationsgerät (54) umfasst, das angepasst ist, um ohne Unterschied die Nachrichten von einer Clientanwendung im Netzwerkformat zu empfangen und zu verarbeiten, die über die interne Verbindung (LL') oder das Netzwerk (R) geliefert werden.

9. Verfahren zur Erstellung eines Kommunikationskanals über eine Verbindung (R; LL), die eine Clientanwendung (10) an einer Clientmaschine (30) einerseits und eine Dienstanwendung (12) andererseits verbindet, wobei die Dienstanwendung auf einem Kommunikationsgerät (2) vorhanden ist, wobei das Kommunikationsgerät mit einem Terminal (31) verbunden ist,
**dadurch gekennzeichnet, dass** das System umfasst:
- einen Schritt der Vertretung (50) der Dienstanwendung, die an der Clientmaschine (30) durchgeführt wird, um Formatierungsbefehle aus den Nachrichten der Clientanwendung auszugeben,
- einen Schritt der Formatierung (16'), die an der Clientmaschine (30) durchgeführt wird, dem Vertreter (50) nachgeschaltet, um die Nachrichten der Clientanwendung in eine Form (Austausch(Msg Karte)) zu formatieren, die für die Dienstanwendung (12) verständlich ist ; und
- die Erstellung eines Gateways (54) an das Terminal (31), um die Nachrichten zu empfangen, die für das Kommunikationsgerät verständlich sind und die für das Kommunikationsgerät verständlichen Nachrichten an der Dienstanwendung (12) zu übermitteln.

10. Verfahren gemäß Anspruch 9, das Verfahren mit einem Kommunikationsgerät vom Typ Chipkarte (2) implementiert wird, wobei die Dienstanwendung eine Kartenanwendung (12) ist.

11. Verfahren gemäß Anspruch 9 oder 10, wobei das Verfahren außerdem einen Schritt der Nachrichtenverschlüsselung bei oder vor dem Schritt der Formatierung (16') umfasst, um zu ermöglichen, dass vom Formatierungsmodul verschlüsselte Nachrichten ausgegeben werden, um diese in verschlüsselter Form über das Gateway (54) am Kommunikationsgerät zu übermitteln (2).

12. Verfahren gemäß einer der Ansprüche 9 bis 11, wobei jede Clientmaschine (30) über ein Netzwerk (R) an das Terminal (31) angeschlossen ist, und der Formatierungsschritt (16') an der Clientmaschine (3) nacheinander die folgenden Schritte von:
- Vertretung (52) des Gateways (54) um die Formatierungsbefehle (Austausch (Msg Karte)) des Formatierungsmoduls (16') zu empfangen und als Antwort Befehle zur Formatierung dieser Befehle in ein für das Gateway (54) verständliches Format zu erzeugen;
- Formatierung der von der Vertretung (52) ausgegebenen Nachrichten des Gateways in Nachrichten (Austausch Msg Netzwerk) in das Netzwerkformat; und
- Anpassung (40) der Nachrichten (Austauch Msg Netzwerk) an die Normen des Netzwerks (R);
und in dem die vom Netzwerk (R) verarbeiteten Nachrichten am Terminal (31) nacheinander durch folgende Schritte verarbeitet werden:
- Sammlung (42) der Nachrichten (Austausch Msg Netzwerk) von den vom Netzwerk ausgegebenen Nachrichten;
- Sammlung (44) der Befehle, die vom Vertreter (52) des Gateways (54) ausgegeben werden; und
- Pilot von Netzwerkbefehle (46), um die Nachrichten (Austauch Msg Karte), die vom vorherigen Modul (44) stammen, am Gateway (54) zu übermitteln.

13. Verfahren gemäß einer der Ansprüche 9 bis 12, in dem
- der Schritt der Formatierung (16') direkt von einem Schritt der Packetierung (40) der Nachrichten (Austausch Msg Karte) gefolgt wird, die für das Kommunikationsgerät verständlich sind, die aus einem Schritt der Packetierung resultierenden Nachrichten, die packetiert sind, um die für das Kommunikationsgerät verständlichen Nachrichten über das Netzwerk (R) zu übermitteln und in dem die packetierten Nachrichten im Laufe des Schrittes der Entpackung (42) entpackt werden, am Terminal (31), um die Nachrichten (Austausch (Msg Karte)) zu sammeln, die vom Schritt der Formatierung ausgegeben wurden und die für das Kommunikationsgerät verständlichen Nachrichten direkt am Gateway (54) wiederzuübermitteln.

## Claims

1. System for establishing a communication channel over a link (R; LL') connecting, on the one hand, a client application (10) on a client machine (30), to, on the other hand, a service application (12), the service application being provided on a communication device (2), the communication device being connected to a terminal (31),
**characterised in that** the system also includes:
- a representative (50) of the service application located at the client machine (30), so as to transmit formatting commands from messages of the client application,
- a formatting module (16') located at the client machine (30), downstream from said representative (50), so as to format the messages of the client application in a form (exchange (Msg card)) that can be understood by the service application (12), and
- a gateway (54) located at the terminal (31), so as to receive said messages that can be understood by the communication device and transmit said messages that can be understood by the communication device to the service application (12).

2. System according to claim 1, wherein the communication device is a chip card (2), the service application being a card application (12).

3. System according to claim 1 or 2, wherein the system additionally comprises means for securing messages operating at the formatting module (16') or upstream from the formatting module, in order to allow the secure messages originating from the formatting module to transit, in a secure form, through the gateway (54) to the communication device (2).

4. System according to any claim 1 to 3, wherein said link includes a network (R) connecting the client machine (30) and the terminal (31), said gateway (54) being a network - communication device type gateway.

5. System according to claim 4, wherein the formatting module (16') is connected to the network (R) via a concatenation of modules consecutively comprising:
- a representative (52) of said gateway (54), in order to receive the formatting commands (exchange (Msg card)) from the formatting module (16') and to issue, in response, commands (format (exchange (Msg card))) for formatting said commands according to a format that can be understood by said gateway (54);
- a network formatting module (38) for formatting said commands of the gateway representative (52) into messages (exchange Msg Network) in the network format; and
- a transport module (40) for adapting said messages (exchange Msg Network) to the network standards (R);
and wherein said gateway (54) is connected to the network (R) via a concatenation of modules consecutively comprising:
- a dual module (42) with the transport module (40) connected to the network (R), so as to retrieve said messages (exchange Msg Network) originating from the network;
- a dual module (44) with the network formatting module (38) for retrieving the commands as transmitted by the representative (52) of said gateway (54); and
- a network control pilot (46) for transmitting the messages (exchange (Msg card)) originating from the dual module (44) with the network formatting module (38) towards said gateway (54).

6. System according to claim 4, wherein the formatting module (16') is connected to the network (R) via a transport module (40) intended for receiving directly from the formatting module said messages (exchange (Msg card)) that can be understood by the communication device and packing said messages that can be understood by the communication device, the messages resulting from a packing operation being referred to as packed, so as to transport said messages that can be understood by the communication device via the network (R),
and wherein, the network - communication device type gateway (54) connected to the network (R) via a dual module (42) with the transport module (40), the dual module with the transport module (40) unpacks the packed messages, so as to retrieve said messages (exchange (Msg card)) that can be understood by the communication device and retransmits directly to said gateway (54) said messages that can be understood by the communication device.

7. System according to any claim 1 to 3, wherein said client machine (30) and said terminal (31), combined on a single physical medium (60), are connected by an internal link (LL'),
and wherein the formatting module (16') is arranged to transmit the formatted messages of the client application (exchange (Msg card)) directly, over said internal link, to said gateway (54).

8. Assembly forming a terminal (31; 60) specially adapted to the system according to any claim 1 to 7, wherein the assembly includes a network - communication device type gateway (54) adapted to receive and process messages originating from a client application in the network format provided by the internal link (LL') or by the network (R).

9. Method for establishing a communication channel over a link (R; LL') connecting, on the one hand, a client application (10) on a client machine (30) to, on the other hand, a service application (12), the service application being provided on a communication device (2), the communication device being connected to a terminal (31),
**characterised in that** the method includes:
- a step of representing (50) the service application carried out at the client machine (30), in order to transmit formatting commands from messages of the client application,
- a formatting step (16') carried out in the client machine (30), downstream from said representative (50), so as to format the messages of the client application in a form (exchange (Msg card)) that can be understood by the service application (12), and
- the constitution of a gateway (54) at the terminal (31), so as to receive said messages that can be understood by the communication device and transmit said messages that can be understood by the communication device to the service application (12).

10. Method according to claim 9, wherein the method is implemented with a communication device of a chip card (2) type, the service application being a card application (12).

11. Method according to claim 9 or 10, wherein the method further comprises a step of encrypting the messages during or before the formatting step (16'), in order to allow the encrypted messages originating from the formatting module to transit, in an encrypted form, through the gateway (54) and to the communication device (2).

12. Method according to any of claims 9 to 11, wherein, the client machine (30) being connected to the terminal (31) via a network (R), the formatting step (16') is followed, at the client machine (30), successively by steps of:
- representing (52) said gateway (54), so as to receive formatting commands (exchange (Msg card)) from the formatting module (16') and to issue, in response, commands for formatting said commands according to a format that can be understood by said gateway (54);
- formatting messages originating from said representation (52) of the gateway (54) into messages (exchange Msg Network) in the network format; and
- adapting (40) said messages (exchange Msg Network) to the network standards (R);
and wherein the messages received from the network (R) at the terminal (31) are processed successively by steps of:
- retrieving (42) said messages (exchange Msg Network) from messages originating from the network;
- retrieving (44) commands originating from the representative (52) of said gateway (54); and
- controlling network commands (46) in order to transmit the messages (exchange Msg card) originating from the preceding module (44) towards said gateway (54).

13. Method according to any claim 9 to 12, wherein
- the formatting step (16') is directly followed by a step of packing (40) said messages (exchange Msg card) that can be understood by the communication device, the messages resulting from a packing step being referred to as packed, so as to transport said messages that can be understood by the communication device via the network (R);
and wherein said packed messages are unpacked during an unpacking step (42) at the terminal (31) so as to retrieve said messages (exchange (Msg card)) from the formatting step and to retransmit said messages that can be understood by the communication device directly to said gateway (54).
